**Europäisches Patentamt**

**European Patent Office**

**Office européen des brevets**

(19)

(11) Veröffentlichungsnummer: **0 066 722**
**A1**

## EUROPÄISCHE PATENTANMELDUNG

(12)

(21) Anmeldenummer: **82104103.5**

(22) Anmeldetag: **12.05.82**

(51) Int. Cl.³: **B 60 P 7/13**

(30) Priorität: **10.06.81 DE 3122925**

(43) Veröffentlichungstag der Anmeldung: **15.12.82**
**Patentblatt 82/50**

(84) Benannte Vertragsstaaten: **AT CH FR IT LI**

(71) Anmelder: **Waggonfabrik Talbot, Jülicher Strasse 213-237, D-5100 Aachen (DE)**

(72) Erfinder: **Stiefel, Christian, Dr.-Ing., Moreller Weg 24, D-5100 Aachen (DE)**
Erfinder: **Kunze, Karl Werner, Dipl.-Ing., Gasthuisstraat 74, NL-6231 JW Meersen (NL)**
Erfinder: **Rohe, Josef, Ambrosiusstrasse 42, D-5100 Aachen (DE)**
Erfinder: **Strauch, Hans-Wilhelm, Talstrasse 5, D-5102 Würselen (DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

(54) Vorrichtung zur Verriegelung von Containern oder Wechselaufbauten auf Tragfahrzeugen oder dergleichen.

(57) Vorrichtung zum Verriegeln von Containern oder Wechselaufbauten auf Tragfahrzeugen oder dergleichen mittels in Beschläge der Container oder Wechselaufbauten eingreifender Riegelzapfen (3), die mit Einführschrägen zum Einfädeln in die Beschläge sowie mit Hinterschneidungen zum Festhalten der Beschläge gegen Abheben versehen und jeweils in einem am Tragfahrzeug angeordneten Gehäuse unverdrehbar, jedoch zwischen einer Arbeitsstellung und einer vollständig im Gehäuse versenkten Ruhestellung axial verschiebbar gelagert sind, indem jeder Riegelzapfen (3) in seiner Arbeitsstellung durch eine Federanordnung (5, 6) belastet ist, die ausgehend von der Arbeitsstellung des Riegelzapfens auf einem kurzen Anfangshub eine hohe Federkraft und auf dem restlichen Hub bis zur Ruhestellung eine niedrigere Rückstellkraft erzeugt. Um die Ausbildung einer derartigen Vorrichtung insbesondere bezüglich ihrer Federanordnung zu vereinfachen, ist die Federanordnung (5, 6) durch eine zwischen dem Gehäuse (1) und dem Riegelzapfen (3) angeordnete Druckfeder (6) sowie durch mindestens eine Riegelfeder (5) gebildet, die auf mindestens ein Rastelement (4) wirkt, das den Riegelzapfen über eine Rastvertiefung (2b) in seiner Arbeitsstellung kraftschlüssig festhält.

- 1 -

Vorrichtung zur Verriegelung von Containern oder
Wechselaufbauten auf Tragfahrzeugen oder dergleichen

Die Erfindung betrifft eine Vorrichtung zur Verriegelung
von Containern oder Wechselaufbauten auf Tragfahrzeugen
oder dergleichen mittels in Beschläge der Container oder
Wechselaufbauten eingreifender Riegelzapfen, die mit
Einführschrägen zum Einfädeln in die Beschläge sowie
mit Hinterschneidungen zum Festhalten der Beschläge
gegen Abheben versehen und jeweils in einem am Tragfahrzeug angeordneten Gehäuse unverdrehbar, jedoch zwischen
einer Arbeitsstellung und einer vollständig im Gehäuse
versenkten Ruhestellung axial verschiebbar gelagert sind,
indem jeder Riegelzapfen in seiner Arbeitsstellung durch
eine Federanordnung belastet ist, die ausgehend von der
Arbeitsstellung des Riegelzapfens auf einem kurzen Anfangshub eine hohe Federkraft und auf dem restlichen Hub
bis zur Ruhestellung eine niedrigere Rückstellkraft erzeugt.

Eine Vorrichtung der voranstehend beschriebenen Art besitzt den Vorteil, daß beim Absetzen eines Containers

- 2 -

oder Wechselaufbaues auf ein Tragfahrzeug von sämtlichen in der Arbeitsstellung befindlichen Riegelzapfen diejenigen, die sich im Bereich des Containers oder Wechselaufbaues befinden und nicht zu dessen Verriegelung benötigt werden, durch den Container oder den Wechselaufbau nach Überwinden der anfänglich höheren Federkraft im Bereich eines kurzen Anfangshubs in ihre Ruhestellung im Gehäuse zurückgedrückt werden, wogegen die zur Verriegelung des Containers oder Wechselaufbaues benötigten Riegelzapfen in die Beschläge des Containers oder Wechselaufbaues eintreten und ihn sicher am Tragfahrzeug festlegen. Nach Abnehmen des Containers oder Wechselaufbaues vom Tragfahrzeug kehren sämtliche Riegelzapfen in ihre Arbeitsposition zurück, so daß das Tragfahrzeug für eine erneute Beladung, auch mit andersartigen Containern oder Wechselaufbauten, zur Verfügung steht.

Die eingangs beschriebene Vorrichtung schafft somit eine Steuerung der auf den Tragfahrzeugen angeordneten Riegelzapfen unmittelbar durch den jeweils festzulegenden Container oder Wechselaufbau, so daß unabhängig vom Umladegerät und von der Tragwagenkonstruktion für alle vorkommenden und denkbaren Beladeanordnungen eine Automatisierung des Ladevorganges möglich ist, die die bei zuvor bekannten Vorrichtungen erforderliche manuelle Bereitstellung der Riegelzapfen entsprechend der jeweiligen Beladeanordnung überflüssig macht und demgemäß nicht nur die Bereitstellung

- 3 -

von Bedienungspersonal verringert, sondern auch Fehlbedienungen ausschließt und den Umladevorgang insgesamt erheblich verkürzt.

Der vorliegenden Erfindung liegt die Aufgabe zugrunde, unter Beibehaltung des voranstehend erläuterten Grundgedankens eine Vorrichtung der eingangs beschriebenen Art zu schaffen, deren Ausbildung, insbesondere Federanordnung, besonders einfach und damit preiswert herstellbar ist.

Die Lösung dieser Aufgabenstellung ist dadurch gekennzeichnet, die die Federanordnung durch eine zwischen dem Gehäuse und dem Riegelzapfen angeordnete Druckfeder sowie durch mindestens eine Riegelfeder gebildet ist, die auf mindestens ein Rastelement wirkt, das den Riegelzapfen über eine Rastvertiefung in seiner Arbeitsstellung kraftschlüssig festhält.

Durch die erfindungsgemäße Ausbildung wird auf einem kurzen Anfangshub der Kraft der Druckfeder die Haltekraft der auf das in eine Rastvertiefung eingreifende Rastelement einwirkenden Riegelfeder überlagert, so daß sich für den Riegelzapfen eine Federkennlinie mit einer hohen Federkraft auf einem kurzen Anfangshub und einer geringeren Rückstellkraft auf dem restlichen Hub ergibt. Wenn die Haltekraft der Riegelfeder und die Gegenkraft der Druckfeder überschritten werden, weil der

- 4 -

Riegelzapfen nicht in einen Beschlag eines Containers oder Wechselaufbaues eintritt, sondern von einem Rahmenteil beim Absenken des Containers oder Wechselaufbaues auf das Tragfahrzeug belastet wird, tritt das Rastelement aus der Rastvertiefung aus, so daß anschließend im wesentlichen nur noch die Kraft der Druckfeder wirksam ist, die zwar bei einer Abnahme des Containers oder Wechselaufbaus eine zuverlässige Rückstellung des Riegelzapfens in die Arbeitslage gewährleistet, einem Zurückdrücken des Riegelzapfens durch ein Rahmenteil des Containers oder Wechselaufbaus jedoch nur einen geringeren Widerstand entgegensetzt.

Bei gleicher Wirkung wie die eingangs erläuterte Konstruktion besitzt die erfindungsgemäße Weiterbildung den Vorteil, daß die in Abhängigkeit vom Hub mit unterschiedlichen Federkräften arbeitende Vorrichtung nur eine Hauptfeder besitzt.

Gemäß einem weiteren Merkmal der Erfindung ist eine ringförmige Rastvertiefung in der zylindrischen Fläche eines rohrförmigen Lagerstückes ausgebildet, das an seiner Oberseite mit dem Riegelzapfen verbunden ist und das mit mehreren, über den Umfang verteilten Rastelementen zusammenwirkt. Die ringförmige Rastvertiefung kann entweder in der Außenfläche des Lagerstückes ausgebildet sein. In diesem Fall sind die jeweils durch eine Riegelfeder belasteten Rastelemente im Gehäuse angeordnet. Bei der alternativen Ausführungsform ist die ringförmige Rastvertiefung in der Innenfläche des Lagerstückes ausgebildet. In diesem Fall sind die Rastelemente in einem in das rohrförmige Lagerstück von unten hineinragenden, am Gehäuse befestigten Vorsprung angeordnet. Im letztgenannten Fall können zwei sich diametral gegenüberliegende Rastelemente durch eine gemeinsame Riegelfeder belastet sein. Vorzugsweise werden die Rastelemente als Kugeln ausgebildet.

Eine bevorzugte Weiterentwicklung der erfindungsgemäßen Vorrichtung ergibt sich schließlich dadurch, daß die Druckfeder als Wendelfeder ausgebildet ist, die einerseits am Boden bzw. an einem ringförmigen Außenflansch des Lagerstückes und andererseits an einem Verschlußdeckel des Gehäuses abgestützt ist. Dieser Verschlußdeckel wird von unten her an das Gehäuse für den Riegelzapfen angeschraubt.

Auf der Zeichnung sind zwei Ausführungsbeispiele der erfindungsgemäßen Vorrichtung dargestellt, und zwar zeigen:

Fig. 1          einen Längsschnitt durch eine erste Ausführungsform und

Fig. 2          einen Längsschnitt durch eine zweite Ausführungsform der Verriegelungsvorrichtung.

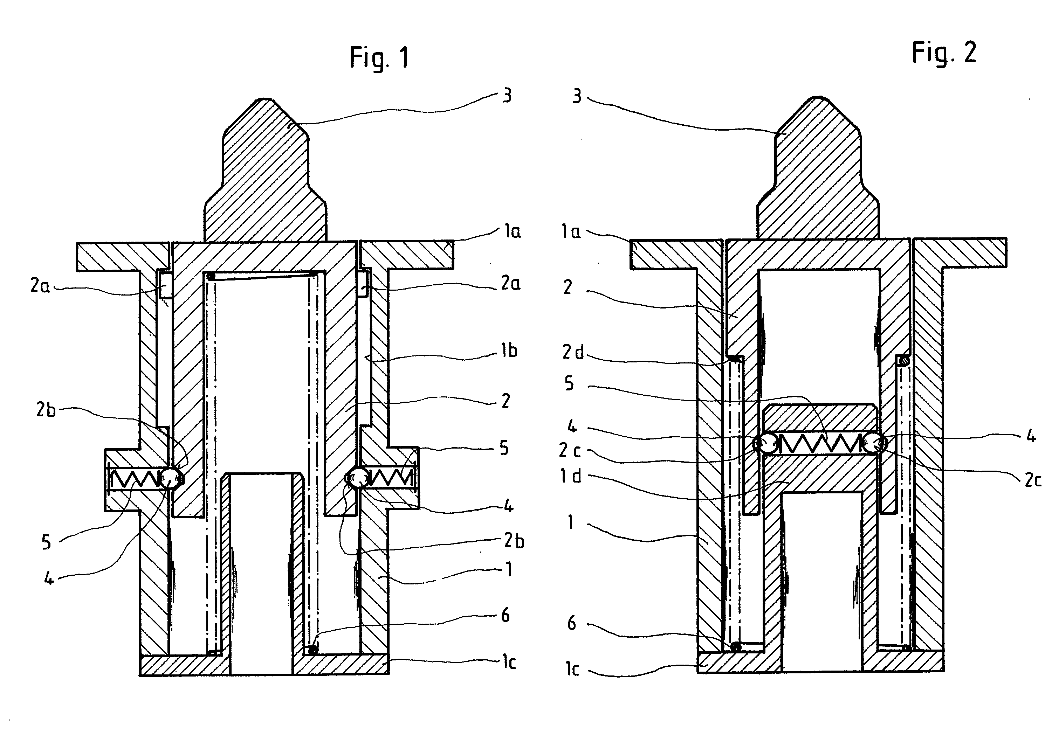

Bei beiden Ausführungsformen besitzt die Vorrichtung ein büchsenartiges Gehäuse 1, welches mit einem Befestigungsflansch 1a versehen ist. In diesem Gehäuse 1 ist ein rohrförmiges Lagerstück 2 angeordnet, das auf seiner Oberseite einen Riegelzapfen 3 trägt. Um Verdrehungen des Lagerstückes 2 im Gehäuse 1 zu verhindern, sind gemäß Fig. 1 im Gehäuse 1 Nuten 1b ausgebildet, in die jeweils eine Nase 2a des Lagerstückes 2 eingreift. Eine entsprechende Ausbildung kann auch bei der Ausführung nach Fig. 2 vorgesehen sein.

Beim ersten Ausführungsbeispiel nach Fig. 1 ist in der zylindrischen Außenfläche des Lagerstückes 2 eine ringförmige Rastvertiefung 2b ausgebildet. In diese Rastvertiefung 2b greifen mehrere als Kugeln ausgeführte Rastelemente 4 ein, die jeweils unter der Kraft einer Riegelfeder 5 stehen und in Bohrungen des Gehäuses 1 angeordnet sind. Das Lagerstück 2 ist durch eine Druckfeder 6 belastet, die im Inneren des Lagerstückes 2 angeordnet ist, sich einerseits an dessen Boden und andererseits am einem Verschlußdeckel 1c abstützt, der an der Unterseite des Gehäuses 1 angeschraubt ist.

Bei der Ausführungsform nach Fig. 2 ist eine ringförmige Rastvertiefung 2c in der Innenfläche des rohrförmigen Lagerstückes 2 ausgebildet. Die mit dieser Rastvertiefung 2c zusammenwirkenden, als Kugeln ausgebildeten Rastelemente 4 sind bei dieser Ausführungsform in einem Vorsprung 1d gelagert, der auf der Oberseite des Verschlußdeckels 1c ausgebildet ist und in das Innere sowohl des Gehäuses 1 als auch des Lagerstückes 2 hineinragt. Bei dieser Ausführungsform werden zwei Rastelemente 4 verwendet, die sich diametral gegenüberliegen und durch eine gemeinsame

- 7 -

Riegelfeder 5 belastet sind. Die Druckfeder 6 liegt außerhalb des rohrförmigen Lagerstückes 2 und stützt sich einerseits wiederum am Verschlußdeckel 1c und andererseits an einem Außenflansch 2d des Lagerstückes 2 ab.

In den Fig. 1 und 2 ist der Riegelzapfen 3 in seiner Arbeitsstellung gezeichnet. Er wird in dieser Arbeitsstellung durch die in die Rastvertiefungen 2b bzw. 2c eingreifenden Rastelemente 4 gehalten, wenn ein Container oder ein Wechselaufbau mit seinem Beschlag auf den Riegelzapfen 3 aufgesetzt wird. Trifft dagegen ein Rahmenstück des Containers oder Wechselaufbaus auf den Riegelzapfen 3 auf, wird dieser mit seinem Lagerstück 2 in das Gehäuse 1 zurückgeschoben.

Hierbei ist auf einem kurzen Anfangshub zusätzlich zur Kraft der Druckfeder 6 die Haltekraft der Riegelfeder 5 bzw. Riegelfedern 5 zu überwinden, welche die Rastelemente 4 in die Rastvertiefung 2b bzw. 2c eindrücken. Erst nach Überwinden dieser Haltekraft werden die Rastelemente 4 zurückgedrückt, so daß die Riegelfedern 5 einem Eindrücken des Riegelzapfens 3 in das Gehäuse 1 bis auf die Reibung der Rastelemente 4, keine Kraft mehr entgegensetzen. Nach diesem Anfangshub ist somit lediglich die Kraft der Druckfeder 6 zu überwinden, die jedoch zuverlässig dafür sorgt, daß das Lagerstück 2 mit dem Riegelzapfen 3 in die Arbeitsstellung zurückkehrt, wenn der Riegelzapfen 3 freigegeben wird.

- 8 -

Bezugszifferliste

| | |
|---|---|
| 1 | Gehäuse |
| 1a | Befestigungsflansch |
| 1b | Nut |
| 1c | Verschlußdeckel |
| 1d | Vorsprung |
| 2 | Lagerstück |
| 2a | Nase |
| 2b | Rastvertiefung |
| 2c | Rastvertiefung |
| 2d | Außenflansch |
| 3 | Riegelzapfen |
| 4 | Rastelement |
| 5 | Rastfeder |
| 6 | Druckfeder |

W/Dg

0066722

- 1 -

<u>A n s p r ü c h e :</u>

1. Vorrichtung zur Verriegelung von Containern oder Wechselaufbauten auf Tragfahrzeugen oder dergleichen mittels in Beschläge der Container oder Wechselaufbauten eingreifender Riegelzapfen, die mit Einführschrägen zum Einfädeln in die Beschläge sowie mit Hinterschneidungen zum Festhalten der Beschläge gegen Abheben versehen und jeweils in einem am Tragfahrzeug angeordneten Gehäuse unverdrehbar, jedoch zwischen einer Arbeitsstellung und einer vollständig im Gehäuse versenkten Ruhestellung axial verschiebbar gelagert sind, indem jeder Riegelzapfen in seiner Arbeitsstellung durch eine Federanordnung belastet ist, die ausgehend von der Arbeitsstellung des Riegelzapfens auf einem kurzen Anfangshub eine hohe Federkraft und auf dem restlichen Hub bis zur Ruhestellung eine niedrigere Rückstellkraft erzeugt,
d a d u r c h   g e k e n n z e i c h n e t ,
daß die Federanordnung durch eine zwischen dem Gehäuse (1) und dem Riegelzapfen (3) angeordnete Druckfeder (6) sowie durch mindestens eine Riegelfeder (5) gebildet ist, die auf mindestens ein Rastelement (4) wirkt, das den Riegelzapfen (3) über eine Rastvertiefung (2b, 2c) in seiner Arbeitsstellung kraftschlüssig festhält.

2. Vorrichtung nach Anspruch 1, dadurch gekennzeichnet, daß eine ringförmige Rastvertiefung (2b, 2c) in der zylindrischen Fläche eines rohrförmigen Lagerstückes (2) ausgebildet ist, das an seiner Oberseite mit dem Riegelzapfen (3) verbunden ist, und daß mehrere Rastelemente (4) über den Umfang verteilt angeordnet sind.

3. Vorrichtung nach Anspruch 1 und 2, dadurch gekennzeichnet, daß die ringförmige Rastvertiefung (2b) in der Außenfläche des Lagerstückes (2) ausgebildet ist und die jeweils durch eine Riegelfeder (5) belasteten Rastelemente (4) im Gehäuse (1) angeodnet sind.

4. Vorrichtung nach Anspruch 1 und 2, dadurch gekennzeichnet, daß die ringförmige Rastvertiefung (2c) in der Innenfläche des Lagerstückes (2) ausgebildet ist und die Rastelemente (4) in einem in das rohrförmige Lagerstück (2) von unten hineinragenden, am Gehäuse (1) befestigten Vorsprung (1d) angeordnet sind.

5. Vorrichtung nach Anspruch 4, dadurch gekennzeichnet, daß zwei sich diametral gegenüberliegende Rastelemente (4) durch eine gemeinsame Riegelfeder (5) belastet sind.

6. Vorrichtung nach mindestens einem der Ansprüche 1 bis 5, dadurch gekennzeichnet, daß die Druckfeder (6) als Wendelfeder ausgebildet ist, die einerseits am Boden bzw. an einem ringförmigen Außenflansch (2d) des Lagerstückes (2) und andererseits an einem Verschlußdeckel (1c) des Gehäuses (1) abgestützt ist.

W/Dg

Fig. 1

Fig. 2

1/1

0066722

Europäisches
Patentamt

# EUROPÄISCHER RECHERCHENBERICHT

0066722

Nummer der Anmeldung

EP 82 10 4103.5

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | betrifft Anspruch | | |
| X,Y | DE - B2 - 2 754 884 (IVANOV et al.)<br>* Fig. 2 *<br>-- | 1-3,5 | | B 60 P 7/13 |
| A,Y | GB - A - 1 523 863 (NESS)<br>* Fig. 3 *<br>-- | 1,2,5 | | |
| P,A | EP - A1 - 0 042 563 (WAGGONFABRIK TALBOT)<br>* Fig. 1 bis 3 *<br>---- | 1,2 | | |

**RECHERCHIERTE SACHGEBIETE (Int. Cl.³)**

B 60 P 7/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie- gende Theorien oder Grund- sätze
E: älteres Patentdokument, das jedoch erst am oder nach dem Anmeldedatum veröffentlicht worden ist
D: in der Anmeldung angeführtes Dokument
L: aus andern Gründen ange- führtes Dokument

&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 09-08-1982 | LUDWIG |

EPA form 1503.1    06.78